# EUROPÄISCHE PATENTSCHRIFT

(11) **EP 1 279 463 B1**
(45) Veröffentlichungstag und Bekanntmachung des Hinweises auf die Patenterteilung: **04.05.2005**
(21) Anmeldenummer: 02014746.8
(22) Anmeldetag: 04.07.2002
(51) Int. Cl.: B23Q 1/74, B23Q 1/00, B23D 47/02

(54) **Vorrichtung zur Vergrösserung eines Maschinentisches**
Device for extending a machine table
Dispositif pour l'extension d'une table de machine

(30) Priorität: 28.07.2001 DE 20112509 U
(43) Veröffentlichungstag der Anmeldung: 29.01.2003
(73) Patentinhaber: AIGNER, Georg, D-94419 Reisbach (DE)
(72) Erfinder: AIGNER, Georg, D-94419 Reisbach (DE)
(74) Vertreter: Gustorf, Gerhard, Dipl.-Ing.

(56) Entgegenhaltungen:
- CH-A- 350 527
- GB-A- 763 280

## Beschreibung

Die Erfindung betrifft eine Vorrichtung zur Vergrößerung eines Maschinentisches, beispielsweise von Werkzeugmaschinen, mit einer insbesondere rechteckigen Tischplatte, die an einer Stirnseite (Längsseite oder Querseite) über ein Haltemittel an der ihr gegenüberliegenden Maschinentischkante anbringbar ist. Eine solche Vorrichtung ist aus GB 763 280 A bekannt.

Derartige Vorrichtungen werden insbesondere eingesetzt, um Maschinentische verlängern zu können, wenn besonders lange Werkstücke bearbeitet werden sollen. Beispiele hierfür sind Holzbearbeitungsmaschinen wie Fräsmaschinen, Kreissägen oder Hobelmaschinen. Bei bekannten Tischverlängerungen der eingangs angegebenen Bauart trägt die rechteckige Tischplatte an einer Stirnseite eine Einhängeschiene, die mit dem Haltemittel gekoppelt werden kann; das Haltemittel ist als Befestigungsschiene ausgebildet, die an ihren beiden Enden an der Maschinentischkante anliegend fixiert ist, während sie zu dieser über den größten Teil ihrer Länge einen Abstand hat, damit die Einhängeschiene aufgesetzt werden kann. Am gegenüberliegenden Ende stützt sich die Tischplatte über einen Fuß am Boden ab, der zur Höhenverstellung teleskopisch ausgebildet ist.

Der Erfindung liegt die Aufgabe zugrunde, eine Vorrichtung zur Vergrößerung eines Maschinentisches zur Verfügung zu stellen, die sich insbesondere für höhenverstellbare Maschinentische eignet, beispielsweise bei Dickenhobelmaschinen, ohne daß hierbei ein Stützfuß der Tischplatte zur Anpassung an die wechselnde Höhe des Maschinentisches verstellt werden muß.

Diese Aufgabe wird durch die Merkmale des Anspruchs 1 gelöst.

Ein wesentlicher Vorteil dieser Vorrichtung besteht darin, daß die Tischplatte nach Art eines Kragarmes fliegend am Maschinentisch befestigt ist, so daß keine Notwendigkeit besteht, einen Stützfuß vorzusehen, der bei jedem Wechsel der Maschinentischhöhe verstellt werden müßte. Dadurch, daß die Tragleiste über ihre gesamte Länge an der Maschinentischkante anliegt und fest mit dieser verbunden ist, ergibt sich eine sehr stabile Halterung der Tischplatte, wenn eine Vergrößerung, insbesondere Verlängerung des Maschinentisches erforderlich ist. Wenn hierzu die beiden Einhängeschlitze über die Kopfschrauben gesetzt werden, besteht keinerlei Gefahr der Durchbiegung der tragend angebrachten Tischplatte.

In Weiterbildung der Erfindung haben die beiden Kopfschrauben einen zur Oberkante der Tragleiste kleineren Abstand als zur Unterkante, so daß das von dem Gewicht der Tischplatte erzeugte Biegemoment um die Horizontale die Stabilität der Befestigung der Tischplatte erhöht, was sich vorteilhaft auf die Genauigkeit der vom Maschinentisch zur Tischplatte durchgehenden Ebene auswirkt.

Die Tragleiste kann mittels Schraubbolzen an der Maschinentischkante fixiert werden. Dabei ist es vorteilhaft, wenn die Tragleiste im Bereich der beiden Längsenden einstellbare Regulierstifte zum Abstützen an der Maschinentischkante aufweist. Mit Hilfe dieser Regulierstifte können Ungenauigkeiten der Maschinentischkante ausgeglichen werden, so daß die Tischplatte immer genau in der Horizontalen ausgerichtet ist.

Alternativ besteht auch die Möglichkeit, die Tragleiste als integralen Bestandteil des Maschinentisches auszubilden und die Kopfschrauben unmittelbar in die Maschinentischkante einzusetzen.

Nach einem weiteren zusätzlichen Merkmal der Erfindung haben die Köpfe der Kopfschrauben radial ausgerichtete Bohrungen zum Einstecken eines stiftförmigen Feststell- und Lösewerkzeugs. Mit diesem können die Kopfschrauben eingestellt nach dem Einhängen der Tischplatte festgezogen werden, so daß die Tischplatte unverrückbar steif an dem Maschinentisch verankert ist. Ferner können die Kopfschrauben so präzise eingestellt werden, daß die Tischplatte leicht abgenommen und spielfrei wieder eingehängt werden kann, so daß sie mit dem Maschinentisch eine durchgehende Ebene schafft.

In Weiterbildung der Erfindung weist die vorzugsweise rechteckige Tischplatte im Bereich ihrer beiden Längskanten einen zu diesen parallelen, durchgehenden Hohlraum mit zur Außenseite hin offenem Längsschlitz für den Durchgriff von Verbindungsschrauben auf. Mit Hilfe der Verbindungsschrauben können jeweils zwei zueinander parallele Tischplatten zu einer breiteren Einheit verbunden werden; ferner ist es möglich, an der Tischplatte deren Breite verlängernde Winkelleisten zu befestigen.

Der Hohlraum kann zur Aufnahme von rechteckigen Flachmuttern für den Eingriff der Verbindungsschrauben ausgebildet sein.

Nach einem anderen zusätzlichen Merkmal der Erfindung ist vorgesehen, daß in die Unterseite der Tischplatte in den Hohlraum mündende Langlöcher für den Durchgriff eines Feststell- und Lösewerkzeuges zur Betätigung der Verbindungsschrauben eingearbeitet sind.

Gemäß einer bevorzugten Ausführungsform der Erfindung ist die rechteckige Tischplatte zu ihrer Mittellängsachse spiegelsymmetrisch ausgebildet. Auf diese Weise ist es besonders einfach, mehrere Tischplatten miteinander zu verbinden, ohne daß dabei auf seitengenaue Positionen geachtet werden müßte.

Es empfiehlt sich, die Tischplatte aus einem Leichtmetall-Strangguß mit hohlem Fachwerkprofil herzustellen, wodurch bei geringem Gewicht eine sehr große Biegesteifigkeit erzielt wird.

Die Erfindung ist nachstehend an einem Ausführungsbeispiel erläutert, das in der Zeichnung dargestellt ist. Es zeigen:
Figur 1 die schematische Darstellung einer als Dickenhobelmaschine ausgebildeten Werkzeugmaschine, deren Maschinentisch durch rechteckige Tischplatten gemäß der Erfindung verlängert ist,
Figur 2 die Ansicht einer Tragleiste,
Figur 3 die Schnittdarstellung der Tragleiste in der Ebene III-III der Figur 2,
Figur 4 die Stirnansicht einer Tischplatte gemäß der Erfindung und
Figur 5 die Draufsicht der in Figur 4 gezeigten Tischplatte.

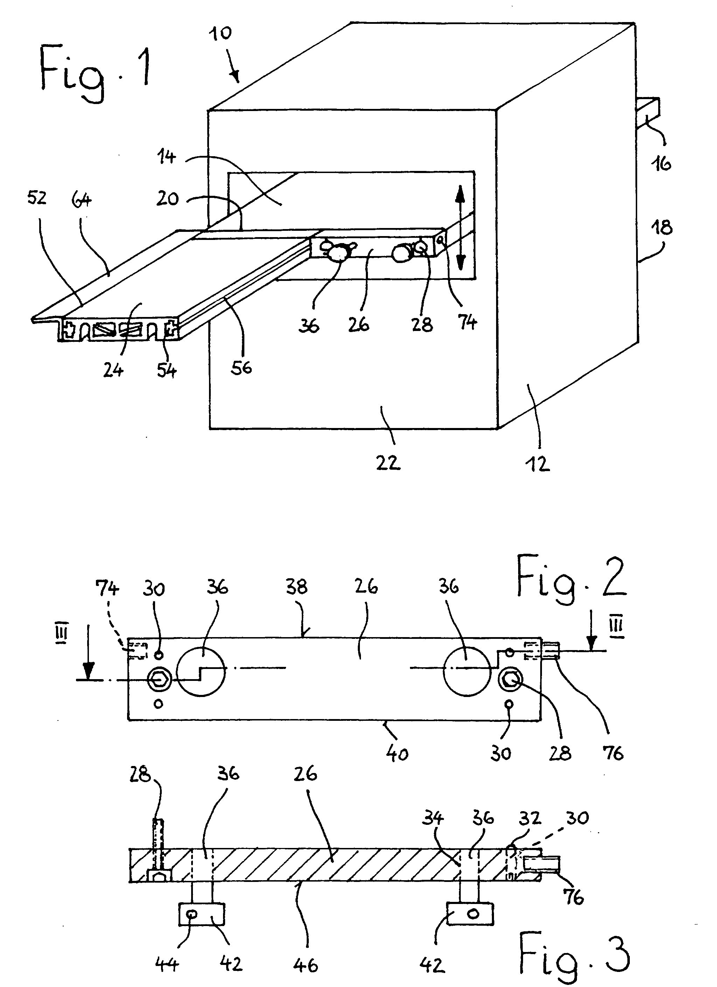

Figur 1 zeigt am Beispiel einer Dickenhobelmaschine 10 die Anwendung der Erfindung. In einem Gehäuse 12 ist ein Maschinentisch 14 höhenverstellbar gelagert. Die zu bearbeitenden Werkstücke werden über einen Aufgabetisch 16 an der Vorderseite 18 des Gehäuses 12 in die Hobelmaschine 10 zugeführt und verlassen diese in bearbeitetem Zustand über den Maschinentisch 14 an der Rückseite 22 des Gehäuses 12.

Das Beispiel der Figur 1 zeigt, daß an der Querkante 20 des Maschinentisches 14 eine oder zwei rechteckige Tischplatten 24 angebracht werden können, die zur Verlängerung des Maschinentisches 14 dienen.

Für jede rechteckige Tischplatte 24 ist eine Tragleiste 26 vorgesehen, welche die in den Figuren 2 und 3 gezeigte Form hat und vorzugsweise aus Stahl hergestellt ist. Jede Tragleiste 26 ist an ihren beiden Enden über einen Schraubbolzen 28 an der Tischkante 20 so befestigt, daß sie mit dem Maschinentisch 14 bündig verläuft. Die beiden Schraubbolzen 28 können in eine Gewindebohrung eingeschraubt werden, die zu diesem Zweck in die Tischkante 20 eingearbeitet werden; alternativ besteht auch die Möglichkeit, die Schraubbolzen 28 über Muttern zu befestigen, wenn dies die Platzverhältnisse zulassen.

Die Figuren 2 und 3 zeigen, daß sowohl über als auch unter den Schraubbolzen 28 jeweils ein Regulierstift 30 in eine durchgehende Gewindebohrung der Tragleiste 26 eingeschraubt ist. Die Regulierstifte 30 können von außen verdreht werden, so daß sich ihre Enden 32 an der Tischkante 20 abstützen. Mit Hilfe der Regulierstifte 30 können Unebenheiten der Tischkante 20 ausgeglichen werden.

Ebenfalls im Bereich der beiden Enden der Tragleiste 26 ist in diese jeweils ein Gewindeloch 34 eingearbeitet, in das eine Kopfschraube 36 eingesetzt ist. Figur 2 zeigt, daß die Kopfschrauben 36 zur Oberkante 38 der Tragleiste 26 einen kleineren Abstand als zu deren Unterkante 40 haben. In die Köpfe 42 der Kopfschrauben 36 sind gemäß Figur 3 radial ausgerichtete Bohrungen 44 eingearbeitet, die zum Einstecken eines stiftförmigen Feststell- und Lösewerkzeugs dienen. Auf diese Weise kann der Abstand der Köpfe 42 von der gegenüberliegenden, vertikalen Oberfläche 46 der Tragleiste 26 eingestellt werden.

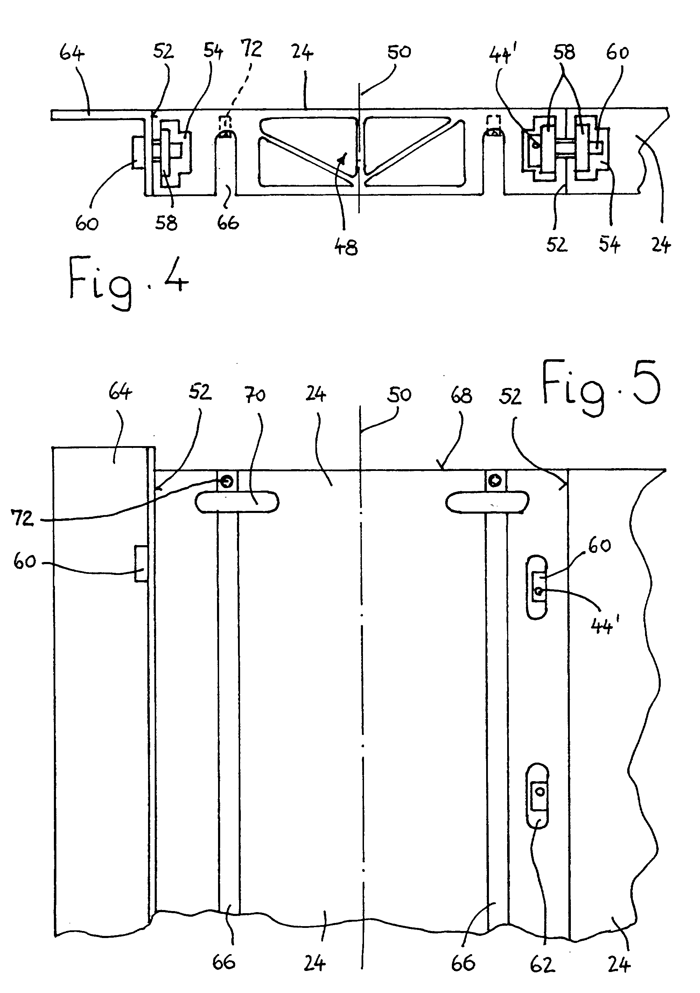

Die Figuren 4 und 5 zeigen die Stirnansicht bzw. Unteransicht zweier miteinander verbundener Tischplatten 24, die aus einem Leichtmetall-Strangguß mit einem hohlen Fachwerkprofil 48 hergestellt sind. Jede Tischplatte 24 ist dabei spiegelsymmetrisch zu ihrer Längsmittelachse 50 ausgebildet.

Im Bereich ihrer beiden Längskanten 52 hat jede Tischplatte 24 einen durchgehenden Hohlraum 54, der - wie vor allem auch Figur 1 zeigt - einen zur Außenseite hin offenen Längsschlitz 56 aufweist. Der Hohlraum 54 ist so ausgebildet, daß er zur Aufnahme rechteckiger Flachmuttern 58 dient (vgl. Figur 4), die für den Eingriff von Verbindungsschrauben 60 ausgebildet sind. Mit Hilfe derartiger Verbindungsschrauben 60 und jeweils zwei Flachmuttern 58 können, wie Figur 4 zeigt, zwei Tischplatten 24 fest miteinander verbunden werden, um eine breitere Einheit zur Verlängerung des Maschinentisches 14 zu schaffen. Ähnlich wie die Kopfschrauben 36 haben auch die Köpfe der Verbindungsschrauben 60 radial ausgerichtete Bohrungen 44', in die ein stiftförmiges Feststell- und Lösewerkzeug eingesteckt werden kann. Damit die Köpfe der Verbindungsschrauben 60 von der Unterseite der Tischkante 20 her betätigt werden können, sind in die Unterseite der Tischplatte 24 (vgl. Figur 5) Langlöcher 62 eingearbeitet, durch die das erwähnte Werkzeug eingeführt werden kann.

Die Figuren 2 und 3 zeigen, daß in die beiden stirnseitigen Enden der Tragleiste 26 jeweils eine Gewindebohrung 74 zur Aufnahme eines Gewindestiftes 76 mit Feingewinde eingearbeitet ist, so daß zwei oder mehr Tragleisten 26 bereits ab Werk fest miteinander verbunden werden können.

Die Figuren 1, 4 und 5 zeigen, daß an der freien Längskante 52 der Tischplatte 24 eine Winkelleiste 64 angebracht werden kann, mit deren Hilfe die Tischplatte 24 verbreitert wird. Zur Befestigung dienen auch hier Verbindungsschrauben 60 mit Flachmuttern 58, die in den entsprechenden Hohlraum 54 eingesetzt sind.

Figur 5 zeigt, daß in die Unterseite jeder Tischplatte 24 zwei Längsnuten 66 eingeformt sind, die von der Längsmittelachse 50 denselben Abstand haben. Im Bereich der Stirnseite 68 der Tischplatte 24, die mit der Tragleiste 26 verbunden werden soll, ist in jede Längsnut 66 quer zu dieser ein nach unten offener Einhängeschlitz 70 eingearbeitet, dessen Breite der Breite der Köpfe 42 der Kopfschrauben 36 entspricht. Der Abstand des Einhängeschlitzes 70 von der Stirnseite 68 entspricht dem Abstand der Köpfe 62 der Kopfschrauben 36 von der Oberfläche 46 der Tragleiste 22 (vgl. Figur 3). Schließlich entspricht der Abstand der beiden Längsnuten 66 dem Abstand der beiden Kopfschrauben 36.

Mit Hilfe der genannten Maßnahmen kann die Tischplatte 24 mit den nach unten offenen Einhängeschlitzen 70 formschlüssig auf die Kopfschrauben 36 aufgesetzt werden, wobei deren Köpfe 42 in die Einhängeschlitze 70 eingreifen, während die Schraubenschäfte in die Längsnuten 66 eingreifen, deren Breite dem Schaftdurchmesser der Kopfschrauben 36 entspricht. Die Tiefe der Längsnuten 66 ist so bemessen, daß nach dem Aufsetzen der Tischplatte 24 deren Oberseite in derselben Ebene wie die Oberseite des Maschinentisches 14 liegt.

In den Figuren 4 und 5 ist angedeutet, daß in den Abschnitt jeder Längsnut 66 zwischen dem Einhängeschlitz 70 und der benachbarten Stirnseite 68 der Tischplatte 24 ein Regulierstift 72 eingeschraubt ist, dessen unteres Ende sich bei eingehängter Tischplatte 24 auf dem Schaft der Kopfschraube 36 abstützt. Da die Regulierschraube 72 vertikal einstellbar ist, kann auf diese Weise die Höhenposition der Tischplatte 24 sehr genau und bündig zur Oberkante 38 der Tragleiste 26 eingestellt werden.

Die Einhängeschlitze 70 erstrecken sich, wie Figur 5 zeigt, über eine ausreichende Breite, so daß ein stiftförmiges Feststell- und Lösewerkzeug in die Bohrungen 44 der Köpfe 42 eingesteckt werden kann, um die Kopfschrauben 36 festzuziehen. Die Tischplatte 24 ist nun fest und präzise mit dem Maschinentisch 14 verbunden.

Die Vorrichtung kann nicht nur bei Werkzeugmaschinen eingesetzt werden, sondern dient auch zur Verlängerung oder Verbreiterung von Maschinen- oder Arbeitstischen im allgemeinen, die beispielsweise zur Durchführung von Montagearbeiten verwendet werden. Die Form der Tischplatte kann dabei rechteckig oder anders ausgebildet sein, beispielsweise trapezförmig. Da die Vorrichtung mit Tischplatte und Tragleiste ein Baukastensystem bildet, ist eine Nachrüstung an bereits bestehenden Maschinen- oder Arbeitstischen problemlos möglich, wobei jede gewünschte Zahl von Tischplatten kombiniert werden kann, um die den Bedürfnissen entsprechende Verlängerung oder Verbreiterung erzeugen zu können.

## Patentansprüche

1. Vorrichtung zur Vergrößerung eines Maschinentisches (14) mit einer Tischplatte (24), die an einer Stirnseite über Haltemittel an der ihr gegenüberliegenden Maschinentischkante (20) anbringbar ist, **dadurch gekennzeichnet, daß** die Haltemittel als eine an der Maschinentischkante (20) fixierbare und i. w. über die ganze Länge an dieser anliegende Tragleiste (26) ausgebildet sind, von der zwei Kopfschrauben (36) abstehen, und daß die Tischplatte (24) an ihrer Unterseite zwei nach unten offene Einhängeschlitze (70) für den formschlüssigen Eingriff der Kopfschrauben (36) aufweist.

2. Vorrichtung nach Anspruch 1, **dadurch gekennzeichnet, daß** die Kopfschrauben (36) einen zur Oberkante (38) der Tragleiste (26) kleineren Abstand als zur Unterkante (40) haben.

3. Vorrichtung nach Anspruch 1 oder 2, **dadurch gekennzeichnet, daß** in die Unterseite der Tischplatte (24) zwei Längsnuten (66) eingeformt sind, deren Abstand dem Abstand der beiden Kopfschrauben (36) und deren Breite dem Schaftdurchmesser der Kopfschrauben (36) entspricht.

4. Vorrichtung nach Anspruch 3, **dadurch gekennzeichnet, daß** in den Abschnitt jeder Längsnuten (66) zwischen dem Einhängeschlitz (70) und der benachbarten Stirnseite (68) der Tischplatte (24) ein vertikal einstellbarer Regulierstift (72) eingeschraubt ist, der sich auf dem Schaft der Kopfschraube (36) abstützt.

5. Vorrichtung nach einem der vorhergehenden Ansprüche, **dadurch gekennzeichnet, daß** die Tragleiste (26) mittels Schraubbolzen (28) an der Maschinentischkante (20) fixierbar ist.

6. Vorrichtung nach Anspruch 5, **dadurch gekennzeichnet, daß** die Tragleiste (26) im Bereich ihrer beiden Längsenden einstellbare Regulierstifte (30) zum Abstützen an der Maschinentischkante (20) aufweist.

7. Vorrichtung nach einem der vorhergehenden Ansprüche, **dadurch gekennzeichnet, daß** die Tragleiste (26) über einen stirnseitig angebrachten Gewindestift (76) mit einer weiteren Tragleiste (26) verbindbar ist.

8. Vorrichtung nach Anspruch 1, **dadurch gekennzeichnet, daß** die Tragleiste (26) integraler Bestandteil des Maschinentisches (14) ist.

9. Vorrichtung nach einem der vorhergehenden Ansprüche, **dadurch gekennzeichnet, daß** die Köpfe (42) der Kopfschrauben (36) radial ausgerichtete Bohrungen (44) zum Einstecken eines stiftförmigen Feststell- und Lösewerkzeugs haben.

10. Vorrichtung nach einem der vorhergehenden Ansprüche, **dadurch gekennzeichnet, daß** die rechteckige Tischplatte (24) im Bereich ihrer beiden Längskanten (52) einen zu diesen parallelen, durchgehenden Hohlraum (54) mit zur Außenseite hin offenem Längsschlitz (56) für den Durchgriff von Verbindungsschrauben (60) aufweist.

11. Vorrichtung nach Anspruch 10, **dadurch gekennzeichnet, daß** der Hohlraum (54) zur Aufnahme von rechteckigen Flachmuttern (58) für den Eingriff der Verbindungsschrauben (60) ausgebildet ist.

12. Vorrichtung nach Anspruch 10 oder 11, **dadurch gekennzeichnet, daß** in die Unterseite der Tischplatte (24) in den Hohlraum (54) mündende Langlöcher (62) für den Durchgriff eines Feststell- und Lösewerkzeuges zur Betätigung der Verbindungsschrauben (60) eingearbeitet sind.

13. Vorrichtung nach einem der Ansprüche 9 bis 12, **dadurch gekennzeichnet, daß** die rechteckige Tischplatte (24) zu ihrer Mittellängsachse (50) spiegelsymmetrisch ausgebildet ist.

14. Vorrichtung nach einem der vorhergehenden Ansprüche, **dadurch gekennzeichnet, daß** die Tischplatte (26) aus einem Leichtmetall-Strangguß mit hohlem Fachwerkprofil (48) hergestellt ist.

## Claims

1. A device for enlarging a machine table (14) comprising a table plate (24) which may be attached on one end face to the machine table edge (20) located opposite the said end face via retaining means, **characterised in that** the retaining means are a supporting strip (26) fixable to the machine table edge (20) and abutting the said edge substantially over the whole length, from which strip two headed screws (36) project, and **in that** the table plate (24) has two downwardly open suspension slots (70) on its underside for the positive-locking engagement of the headed screws (36).

2. A device according to Claim 1, **characterised in that** the spacing of the headed screws (36) is less from the top edge (38) of the supporting strip (26) than from the bottom edge (40).

3. A device according to Claim 1 or 2, **characterised in that** two longitudinal grooves (66) are moulded into the underside of the table plate (24), the spacing of the said grooves corresponding to the spacing of the two headed screws (36) and the width of the said grooves corresponding to the shank diameter of the headed screws (36).

4. A device according to Claim 3, **characterised in that** a vertically adjustable adjusting pin (72), which is supported on the shank of the headed screw (36), is screwed into the portion of each of the longitudinal grooves (66) between the suspension slot (70) and the adjacent end face (68) of the table plate (24).

5. A device according to one of the preceding claims, **characterised in that** the supporting strip (26) is fixable to the machine table edge (20) by means of screw bolts (28).

6. A device according to Claim 5, **characterised in that** the supporting strip (26) has adjustable adjusting pins (30) in the region of its two longitudinal ends for supporting on the machine table edge (20).

7. A device according to one of the preceding claims, **characterised in that** the supporting strip (26) may be connected to another supporting strip (26) via a threaded pin (76) fitted on the end face.

8. A device according to Claim 1, **characterised in that** the supporting strip (26) is an integral component part of the machine table (14).

9. A device according to one of the preceding claims, **characterised in that** the heads (42) of the headed screws (36) have radially oriented bores (44) for the insertion of a pin-shaped locking and releasing tool.

10. A device according to one of the preceding claims, **characterised in that** the rectangular table plate (24) has a continuous cavity (54) in the region of its two longitudinal edges (52), parallel to the said edges, comprising a longitudinal slot (56) open to the outside for the passage therethrough of connecting screws (60).

11. A device according to Claim 10, **characterised in that** the cavity (54) is designed so as to receive rectangular flat nuts (58) for the engagement of the connecting screws (60).

12. A device according to Claim 10 or 11, **characterised in that** elongated slots (62) opening into the cavity (54) are machined into the underside of the table plate (24) for the passage therethrough of a locking and releasing tool for manipulating the connecting screws (60).

13. A device according to one of Claims 9 to 12, **characterised in that** the rectangular table plate (24) is designed so as to be mirror-symmetrical in relation to its longitudinal centre axis (50).

14. A device according to one of the preceding claims, **characterised in that** the table plate (26) is fabricated from a light metal continuous casting with a hollow lattice profile (48).

## Revendications

1. Dispositif pour l'extension d'une table de machine (14) avec un plateau de table (24) dont une face terminale peut être montée, par l'intermédiaire de moyens de maintien, sur le bord de table de machine (20) qui lui est opposé, **caractérisé en ce que** les moyens de maintien sont conçus comme un tasseau (26) duquel dépassent deux vis à tête (36), lequel est fixable sur le bord de table de machine (20) et est ajusté pour l'essentiel sur toute sa longueur contre ledit bord, et **en ce que** le plateau de table (24) présente sur son dessous deux fentes d'accrochage (70) ouvertes vers le bas, qui reçoivent solidairement les vis à tête (36).

2. Dispositif selon la revendication 1, **caractérisé en ce que** les vis à tête (36) sont moins éloignées du bord supérieur (38) du tasseau (26) que de son bord inférieur (40).

3. Dispositif selon la revendication 1 ou 2, **caractérisé en ce que** le dessous du plateau de table (24) présente deux entailles longitudinales (66), dont l'écartement correspond à l'écartement des deux vis à tête (36) et dont la largeur correspond au diamètre de la tige des vis à tête (36).

4. Dispositif selon la revendication 3, **caractérisé en ce que** dans le tronçon de chaque entaille longitudinale (66) compris entre la fente d'accrochage (70) et la face terminale voisine (68) du plateau de table (24) est vissée une tige de réglage (72) réglable dans le sens vertical, qui s'appuie sur la tige de la vis à tête (36).

5. Dispositif selon l'une des revendications précédentes, **caractérisé en ce que** le tasseau (26) est fixable au bord de table de machine (20) par des boulons filetés (28).

6. Dispositif selon la revendication 5, **caractérisé en ce que** le tasseau (26) présente, dans la zone de ses deux extrémités longitudinales, des tiges de réglage (30) réglables permettant l'appui sur le bord de table de machine (20).

7. Dispositif selon l'une des revendications précédentes, **caractérisé en ce que** le tasseau (26) peut être relié à un tasseau supplémentaire (26) par une tige filetée (76) montée sur la face terminale.

8. Dispositif selon la revendication 1, **caractérisé en ce que** le tasseau (26) est partie intégrante de la table de machine (14).

9. Dispositif selon l'une des revendications précédentes, **caractérisé en ce que** les têtes (42) des vis à tête (36) présentent des trous (44) dirigés dans le sens radial, qui servent à enficher un outil de blocage et de déblocage en forme de tige.

10. Dispositif selon l'une des revendications précédentes, **caractérisé en ce que** le plateau de table rectangulaire (24) présente dans la zone de ses deux bords longitudinaux (52) une cavité (54) continue parallèle à ces derniers, laquelle est munie d'une fente longitudinale (56) ouverte sur la face externe et destinée à la pénétration de vis de jonction (60).

11. Dispositif selon la revendication 10, **caractérisé en ce que** la cavité (54) est conçue pour recevoir des écrous plats rectangulaires (58) permettant l'engrènement des vis de jonction (60).

12. Dispositif selon la revendication 10 ou 11, **caractérisé en ce que** le dessous du plateau de table (24) présente des trous oblongs (62) débouchant dans la cavité (54), qui sont destinés à la pénétration d'un outil de blocage et de déblocage prévu pour l'actionnement des vis de jonction (60).

13. Dispositif selon l'une des revendications 9 à 12, **caractérisé en ce que** le plateau de table rectangulaire (24) est conçu avec une symétrie renversée par rapport à son axe longitudinal médian (50).

14. Dispositif selon l'une des revendications précédentes, **caractérisé en ce que** le plateau de table (24) est fait d'une coulée continue à profil cloisonné creux (48).
